# EUROPEAN PATENT APPLICATION

(11) **EP 4 560 363 A2**
(43) Date of publication of application: **28.05.2025**
(21) Application number: 24213914.5
(22) Date of filing: 19.11.2024
(51) Int. Cl.: G01V 8/22

(54) **SAFETY MECHANISM FOR COMPARING SENSING SIGNALS**

(30) Priority: 24.11.2023 TW 112145473
(71) Applicant: Estec Corporation, New Taipei City 248 (TW)
(72) Inventor: HSU, Chun-Pu, New Taipei City (TW)
(74) Representative: Viering, Jentschura & Partner mbB Patent- und Rechtsanwälte

(57) **Abstract**

A safety mechanism (100) for comparing sensing signals is disposed in an automatic passing apparatus (200) (such as electric automatic doors or electric rolling doors). The safety mechanism (100) includes at least one light emitting module (1-1), at least one emitting convex lens group (4-1), at least one light receiving module (2), at least one receiving convex lens group (5), and at least one control module (3). The light emitting module (1-1) is configured to emit light to form a light field area (300) in a passing environment, and is configured to generate a corresponding luminous flux. The light receiving module (2) is configured to receive reflection light reflected back from the light field area (300). The reflection light is converted into a first static electrical signal by a photoelectric conversion component, and is stored in a processing unit (31) of the control module (3) for comparison.

## Description

### FIELD OF THE INVENTION

The present invention relates to a safety mechanism for comparing sensing signals, and more particularly to a mechanism that is disposed inside a light quantity sensor of an automatic passing apparatus and is applied to comparing and determining differences between an electrical signal stored in a processing unit and a changing electrical signal, so as to provide a safety sensing device that keeps door leaves open and prevents the door leaves from closing on people.

### BACKGROUND OF THE INVENTION

An automatic passing apparatus is generally used in places where personnel or carriers frequently enter, leave, or approach, such as storehouses, passage partitions, banks, shopping malls, and offices. Through a sensing device disposed on a top portion of a door, the approaching, entering, or leaving of the personnel or the carriers can be sensed, and a motor is driven to enable opening of a door leaf or a rolling door of the automatic passing apparatus. After the personnel or the carriers pass through, the sensing device no longer senses their presence, and the door leaf or the rolling door of the automatic passing apparatus returns to being closed. A light sensing device is usually used for the sensing of the automatic passing apparatus, and an existing infrared sensing device is often used for dynamic sensing. When a sensed body enters a light field area, such sensing device is not capable of sensing the static sensed body. As a result, the door leaf cannot remain open, and closing of the door leaf may cause the danger of collision with the static sensed body. In the related art, a control module of the automatic passing apparatus does not have the function of storing and comparing door leaf electrical signals generated by reflection light of a door leaf light field. As such, when the sensed body is located at a position where the door leaf moves to be closed, the control module cannot guarantee that the door leaf is maintained in an opened state or that closing is performed in a safe manner.

### SUMMARY OF THE INVENTION

In response to the above-referenced technical inadequacies, the present invention provides a safety mechanism for comparing sensing signals. Regardless of a dynamic or a static condition, the safety mechanism of the present invention (which is disposed in a light quantity sensor) can detect and determine in an accurate manner, such that a door leaf of an automatic passing apparatus can be kept in an opened position and have a safe and accurate closing operation.

In order to solve the above-mentioned problems, one of the technical aspects adopted by the present invention is to provide a safety mechanism for comparing sensing signals which is disposed in an automatic passing apparatus. The safety mechanism includes: at least one emitting convex lens group, at least one light emitting module, at least one receiving convex lens group, at least one light receiving module, and at least one control module. The at least one emitting convex lens group includes one or more emitting convex lens. The at least one light emitting module includes one or more light emitting component. Each of the light emitting components is configured to project light to the respective emitting convex lens by a geometrical optics approach, so as to form a corresponding light field area and a corresponding luminous flux. The at least one receiving convex lens group includes one or more receiving convex lens. The at least one light receiving module includes one or more light receiving component and is a photoelectric conversion component. The luminous flux of the light field area is configured to reflect a corresponding one of reflection light depending on an environment, and is configured to reflect the corresponding one of the reflection light to the respective one or more light receiving components through the at least one receiving convex lens group by the geometrical optics approach, and is configured to convert the reflection light into a corresponding electrical signal. The at least one light receiving module is electrically connected to the at least one control module. The at least one control module includes one or more processing unit, and the processing unit includes an electronic circuit, a micro-controller (MCU), a memory (RAM), etc. The corresponding electrical signal converted by the light receiving component is input and stored in the processing unit. When a sensed body is absent from the light field area, the at least one light receiving module is configured to output a static first environment electrical signal, and the first environmental electrical signal is stored to the processing unit of the at least one control module for comparison and reference. When the sensed body is present in the light field area, the at least one light receiving module is configured to generate a first changing electrical signal regardless of whether the sensed body is in a dynamic or a static state, and the first changing electrical signal is compared with the stored first environment electrical signal in the processing unit. In response to a waveform of the first changing electrical signal being different from a waveform of the first environment electrical signal, the at least one control module is configured to enable the automatic passing apparatus to be in an opened state. A door leaf light emitting module and a door leaf light receiving module are configured to correspondingly project and sense a moving position of a door leaf of the automatic passing apparatus, so as to form a luminous flux of a door leaf light field area. When the door leaf is fully opened and the sensed body is absent from the door leaf light field area, the door leaf light receiving module is configured to generate a static second electrical signal of the door leaf, and the second static electrical signal is additionally stored in the processing unit of the at least one control module for comparison and reference. When the door leaf is fully opened and the sensed body is present in the door leaf light field area, the door leaf light receiving module is configured to generate a second changing electrical signal of the door leaf regardless of whether the sensed body is in the dynamic or the static state, and the second changing electrical signal is compared with the stored second static electrical signal in the processing unit. In response to a waveform of the second changing electrical signal being different from a waveform of the second static electrical signal, the at least one control module is configured to enable the automatic passing apparatus to be in the opened state. A closing operation of the door leaf of the automatic passing apparatus is performed at a constant velocity, such that the door leaf reflects reflection light with regular changing fluctuations within an operation area of the door leaf; wherein the door leaf light receiving module is configured to output a third door leaf electrical signal, and the third door leaf electrical signal is additionally stored in the processing unit of the at least one control module. The third door leaf electrical signal generated from each closing operation of the door leaf is compared with the stored third door leaf electrical signal in the processing unit, and the processing unit of the at least one control module is configured to enable the door leaf of the automatic passing apparatus to complete a closing action when a same regularly changing fluctuation is detected.

In one of the possible or preferred embodiments, the number of the light emitting component is plural, and the light emitting components are electrically connected to a first circuit board. A quantity of the light receiving component is plural, and the light receiving components are electrically connected to a second circuit board. The light receiving components are electrically connected to the at least one control module through the second circuit board.

In one of the possible or preferred embodiments, the at least one light emitting module is correspondingly disposed at a rear side of the at least one emitting convex lens group, and light emitted by the light emitting component is projected to a passing environment through the emitting convex lens, so as to form the light field area corresponding to the luminous flux. The at least one light receiving module is correspondingly disposed at a rear side of the at least one receiving convex lens group, and the light reflected back by the luminous flux in the light field area is reflected to the light receiving component through the receiving convex lens.

In one of the possible or preferred embodiments, the emitting convex lens and the receiving convex lens are each a Fresnel lens.

In one of the possible or preferred embodiments, the luminous flux of the light field area reflects static reflection light when the sensed body is not in the light field area, and the static reflection light is converted into the first static electrical signal and is stored in a database of the processing unit for comparison. Each reflection light of the luminous flux of the light field area correspondingly represents one of various states of the sensed body, and the states of the sensed body include the dynamic state and the static state.

In one of the possible or preferred embodiments, a database of the processing unit stores the data of various door leaf electrical signals converted from the reflection light of the luminous flux in the door leaf light field area as the door leaf of the automatic passing apparatus is in a fully-opened state, a fully-closed state, and a moving state for comparison.

In one of the possible or preferred embodiments, a database of the processing unit stores various electrical signals for comparing a variation of the reflection light of the luminous flux in the light field area. Each type of the variation of the reflection light of the luminous flux in the light field area correspondingly represents various states of the sensed body, and the states of the sensed body include the dynamic state and the static state.

In one of the possible or preferred embodiments, the at least one light emitting module includes at least one visible light emitting module, and the at least one visible light emitting module has one or more visible light emitting component and one or more visible light emitting convex lens. Visible light is emitted by the at least one visible light emitting module by the geometrical optics approach to generate at least one visible light projection point. The at least one visible light emitting module is a laser emitting module. A laser emitting component and the visible light emitting convex lens integrally cover an apparatus, and emitting at least one laser projection point. The visible light module is configured to correspondingly project on a position at an inner side of a front edge of the light field area, and is configured to indicate relative positions of the light field area and the automatic passing apparatus.

In order to solve the above-mentioned problems, another one of the technical aspects adopted by the present invnetion is to provide a safety mechanism for comparing sensing signals which is disposed in a light quantity sensor of an automatic passing apparatus. The safety mechanism includes: at least one emitting convex lens group, at least one light emitting module, at least one receiving convex lens group, at least one light receiving module, and at least one control module. The at least one emitting convex lens group includes one or more emitting convex lens. The at least one light emitting module includes one or more light emitting component, and each of the light emitting components is configured to project light to the respective emitting convex lens by a geometrical optics approach, so as to form a corresponding light field area and a corresponding luminous flux. The at least one receiving convex lens group includes one or more receiving convex lens. The at least one light receiving module includes one or more light receiving components and is a photoelectric conversion component. The luminous flux of the light field area is configured to reflect a corresponding one of reflection light depending on an environment, and is configured to reflect to the respective light receiving component through the at least one receiving convex lens group by the geometrical optics approach, and is configured to convert the reflection light into a corresponding electrical signal. The at least one light receiving module is electrically connected to the at least one control module. The at least one control module includes a processing unit, and the processing unit includes an electronic circuit, a micro-controller (MCU), a memory (RAM), etc. The corresponding electrical signal converted by the light receiving component is input and stored in the processing unit. When a sensed body is absent from the light field area, the at least one light receiving module is configured to generate a first environment electrical signal, and the first environmental electrical signal is stored in the processing unit of the at least one control module for comparison and reference. When the sensed body is present in the light field area, the at least one light receiving module is configured to generate a first changing electrical signal regardless of whether the sensed body is in a dynamic or a static state, and the first changing electrical signal is compared with the first environment electrical signal that is stored in the processing unit. In response to a waveform of the first changing electrical signal being different from a waveform of the first environment electrical signal, the at least one control module is configured to enable the automatic passing apparatus to be in an opened state.

In order to solve the above-mentioned problems, yet another one of the technical aspects adopted by the present invention is to provide a safety mechanism for comparing sensing signals which is disposed in a light quantity sensor of an automatic passing apparatus. The safety mechanism includes: at least one emitting convex lens group, at least one light emitting module, at least one receiving convex lens group, at least one light receiving module, and at least one control module. The at least one emitting convex lens group includes one or more emitting convex lens. The at least one light emitting module includes one or more light emitting components. The light emitting component is configured to project light to the respective emitting convex lens by the geometrical optics approach, so as to form a corresponding light field area and a corresponding luminous flux. The at least one receiving convex lens group includes one or more receiving convex lens. The at least one light receiving module includes a light receiving component and is a photoelectric conversion component. The luminous flux of the light field area is configured to reflect a corresponding one of reflection light depending on an environment, and is configured to reflect to the respective light receiving component through the at least one receiving convex lens group by the geometrical optics approach, and is configured to convert the reflection light into a corresponding electrical signal. The at least one light receiving module is electrically connected to the at least one control module. The at least one control module includes at least one processing unit, and the processing unit includes an electronic circuit, a micro-controller (MCU), a memory (RAM), etc. The corresponding electrical signal converted by the light receiving component is input and stored in the processing unit. A door leaf light emitting module and a door leaf light receiving module are configured to correspondingly project and sense a moving position of a door leaf of the automatic passing apparatus, so as to form a luminous flux of a door leaf light field area. When the door leaf is fully opened and the sensed body is absent from the door leaf light field area, the door leaf light receiving module is configured to generate a second static electrical signal of the door leaf, and the second static electrical signal is additionally stored in the processing unit of the at least one control module for comparison and reference. When the door leaf is fully opened and the sensed body is present in the door leaf light field area, the door leaf light receiving module is configured to generate a second changing electrical signal of the door leaf regardless of whether the sensed body is in the dynamic state or the static state, and the second changing electrical signal is compared with the stored second static electrical signal in the processing unit. In response to a waveform of the second changing electrical signal being different from a waveform of the second static electrical signal, the at least one control module is configured to enable the automatic passing apparatus to be in the opened state. A closing operation of the door leaf of the automatic passing apparatus is performed at a constant velocity, such that the door leaf reflects a reflection light with regular variations within an operation area of the door leaf. The door leaf light receiving module is configured to output a third door leaf electrical signal, and the third door leaf electrical signal is additionally stored in the processing unit of the at least one control module. The third door leaf electrical signal generated from closing operation of the door leaf is compared with the stored door leaf electrical signal in the processing unit. The processing unit of the at least one control module is configured to enable the door leaf of the automatic passing apparatus to complete a closing action when a same regularly changing fluctuation is detected.

Therefore, the safety mechanism for comparing the sensing signals provided by the present invention includes at least one light emitting module, at least one emitting convex lens group, at least one light receiving module, at least one receiving convex lens group, and at least one control module. The at least one light emitting module includes one or more light emitting component. The light emitting component is configured to emit light, and the light is projected through an emitting convex lens, so as to form a light field area and a corresponding luminous flux in a passing environment. The at least one light receiving module includes one or more light receiving component, and the light receiving component is configured to receive reflection light in the light field area through a receiving convex lens. The at least one control module includes a processing unit, and the light receiving component receives and converts the reflection light in the light field area into electrical signals for transmission to the processing unit. By using change of the reflection light in the light field area, whether or not a sensed body is present can be determined, and control over switching on and off of the automatic passing apparatus can thus be provided. Hence, in the present invention, light field variations of the light field area are utilized to determine whether or not the sensed body (such as personnel or an object) is present. Regardless of a static or a dynamic condition, detection and determination can be performed in an accurate manner, thereby allowing a safe and accurate closing operation of a door leaf of the automatic passing apparatus.

Furthermore, the light field area of the present invention is within an operating path area of the door leaf of the automatic passing apparatus. When the door leaf is fully opened and no sensed body is present in a door leaf light field area, a door leaf receiving module will generate a second static electrical signal of the door leaf, and the second static electrical signal is further stored in the processing unit of the at least one control module for comparison and reference. Later, when the door leaf is fully opened and the sensed body is present in the door leaf light field, a second changing electrical signal will be generated regardless of a dynamic or a static state. By comparing the difference between these two signals, the at least one control module enables the automatic passing apparatus to be kept in an opened state. At the same time, since a closing operation of the door leaf is performed at a constant velocity, reflection light with regular variations is generated and converted into a third door leaf electrical signal. The third door leaf electrical signal is stored in the processing unit of the at least one control module. Later, the third door leaf electrical signal generated from each closing operation of the door leaf will be compared with the stored third door leaf electrical signal, and the at least one control module enables the door leaf of the automatic passing apparatus to complete a safe closing action when a same regularly changing fluctuation is detected between said two door leaf electrical signals.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a schematic exploded view of a whole mechanism of a safety mechanism for comparing sensing signals according to a first embodiment of the present invention;
FIG. 2 is a schematic view illustrating emission of optical axes of infrared rays and visible light of the safety mechanism for comparing the sensing signals according to the first embodiment of the present invention;
FIG. 3 is a schematic view of optical axes of infrared reflection light and a laser emitting module of the safety mechanism for comparing the sensing signals according to the first embodiment of the present invention;
FIG. 4 is a schematic exploded view of a safety mechanism for comparing sensing signals without a whole visible light mechanism according to a second embodiment of the present invention;
FIG. 5 is a schematic view of optical axes of infrared rays and reflection light of the safety mechanism for comparing the sensing signals according to the second embodiment of the present invention;
FIG. 6 is a schematic view of projected optical axes and a light field area of the safety mechanism for comparing the sensing signals according to the second embodiment of the present invention;
FIG. 7 is a schematic view of projected optical axes of the infrared rays and the visible light and a light field area of the safety mechanism for comparing the sensing signals according to the first embodiment of the present invention;
FIG. 8 is a schematic view of optical axes of reflection light in the light field area of the safety mechanism for comparing the sensing signals according to the first embodiment of the present invention;
FIG. 9 is a schematic view of projected optical axes of infrared rays and visible light and a light field area of a safety mechanism for comparing sensing signals according to a third embodiment of the present invention; and
FIG. 10 is a schematic view of optical axes of reflection light in the light field area of the safety mechanism for comparing the sensing signals according to the third embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [Embodiments]

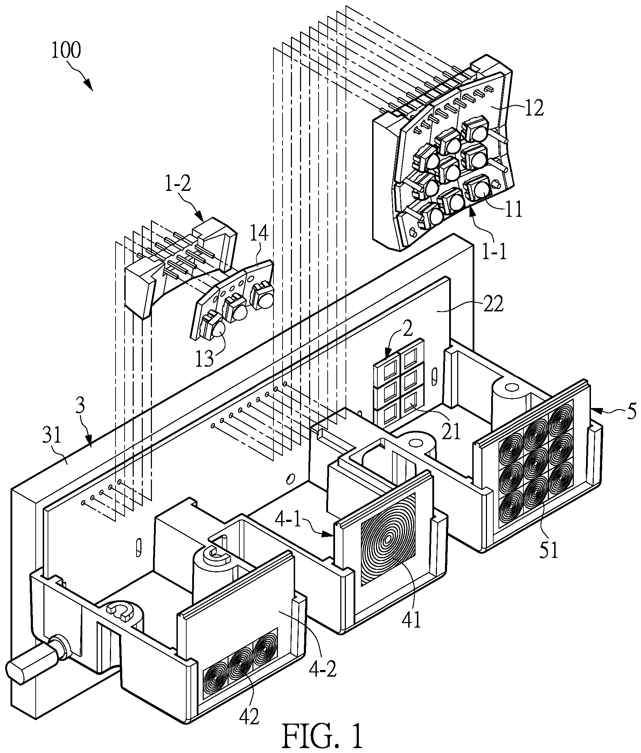

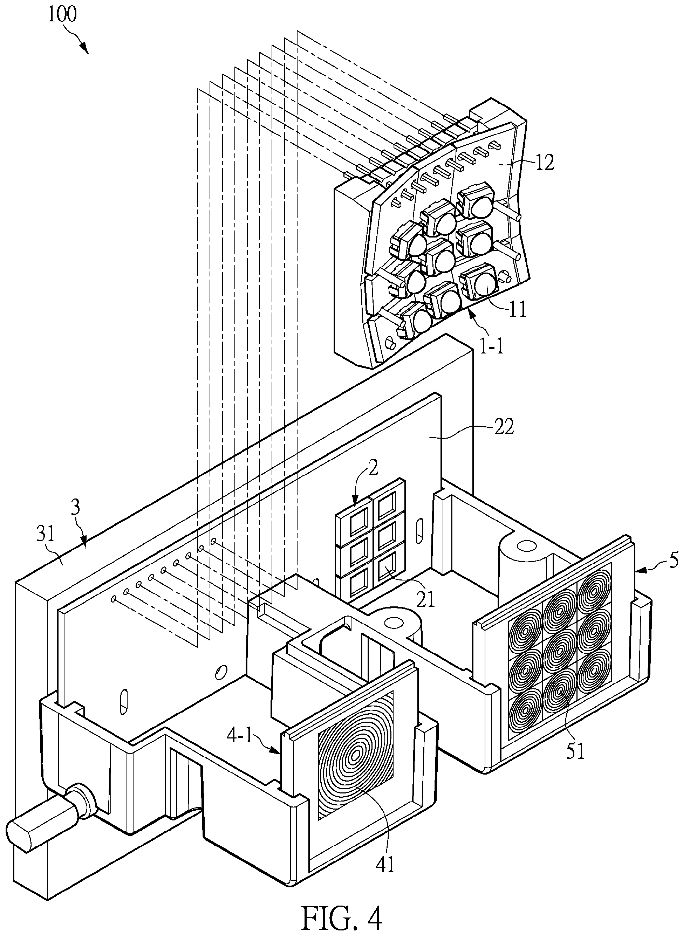

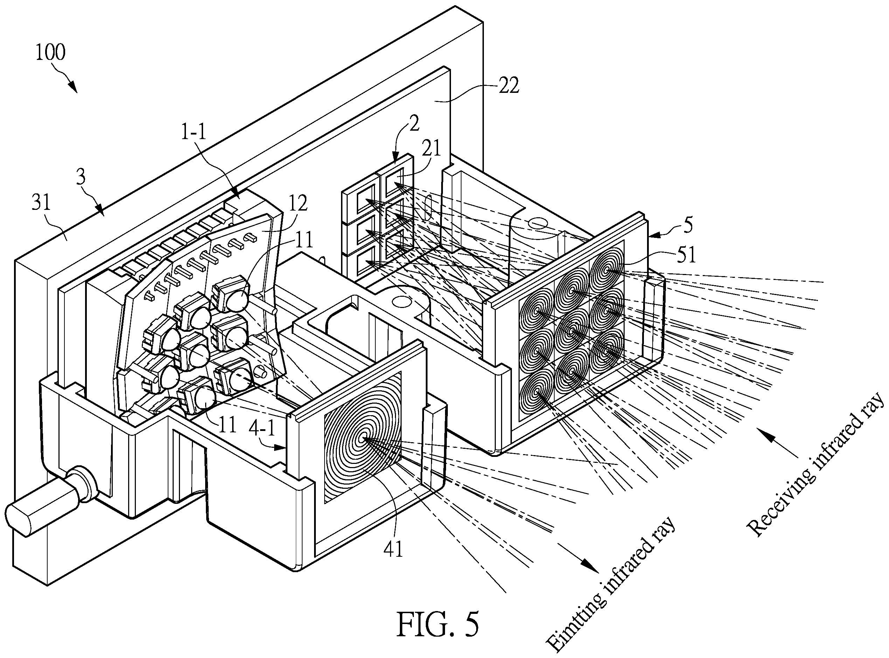

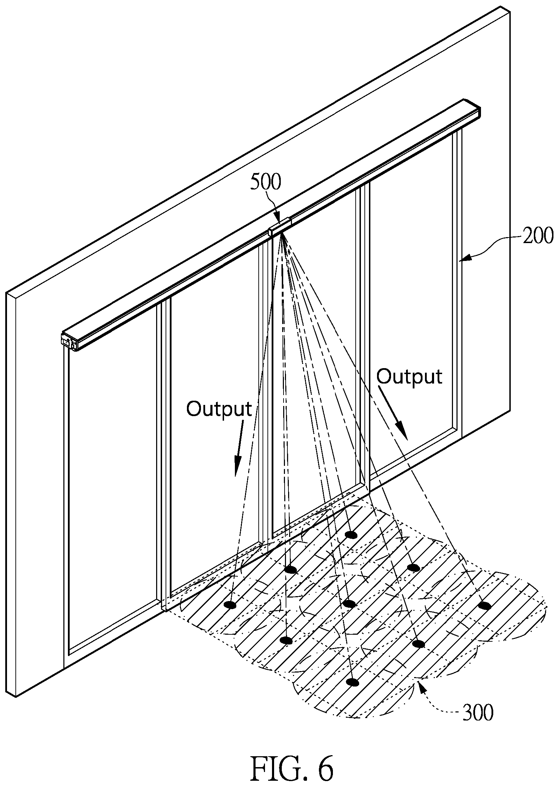

Referring to FIG. 1, a first embodiment of the present invention provides a safety mechanism 100 for comparing sensing signals, and the mechanism requires a mechanism correspondingly disposed inside a light quantity sensor 500. A casing size and an appearance of said sensor can be designed based on practical requirements. A detecting device is to be disposed in a passing area of an automatic passing apparatus (such as an electric automatic door and an electric rolling door). In the present embodiment, the detecting device is disposed in the automatic passing apparatus 200 (as shown in FIG. 6 to FIG. 10), and the automatic passing apparatus 200 can be the electric automatic door or the electric rolling door. In the present embodiment, the automatic passing apparatus 200 is the electric automatic door, and the safety mechanism 100 sensing signal is disposed in the mechanism inside the light quantity sensor mentioned above, and is disposed above the automatic apparatus 200. The safety mechanism 100 includes at least one light emitting module 1-1, at least one visible light emitting module 1-2, at least one light receiving module 2, and at least one control module 3. The (infrared) light emitting module 1-1, the visible light emitting module 1-2, and the (infrared) light receiving module 2 are provided in the present embodiment, and the light emitting module 1-1 and the light receiving module 2 are spaced apart from each other. The quantity and the position of the light emitting module 1-1 and the light receiving module 2 are not limited, and can be changed as needed. In addition, the safety mechanism 100 can be without devices relevant to the visible light emitting module 1-2 (as shown in FIG. 4 and FIG. 5).

Reference is made to FIG. 4. The light emitting module 1-1 includes at least one light emitting component 11, and the quantity of the at least one light emitting component 11 is plural in the present embodiment. The light emitting components 11 can be electrically connected to a first circuit board 12, so as to form a modular design. The light emitting component 11 can project light and form a light field area 300 (as shown in FIG. 6), and generate a corresponding luminous flux. The light field area 300 is projected on the passing area of the automatic passing apparatus 200, and the light field area 300 can be separately or simultaneously projected on the passing area inside or outside the door of the automatic passing apparatus 200 as needed.

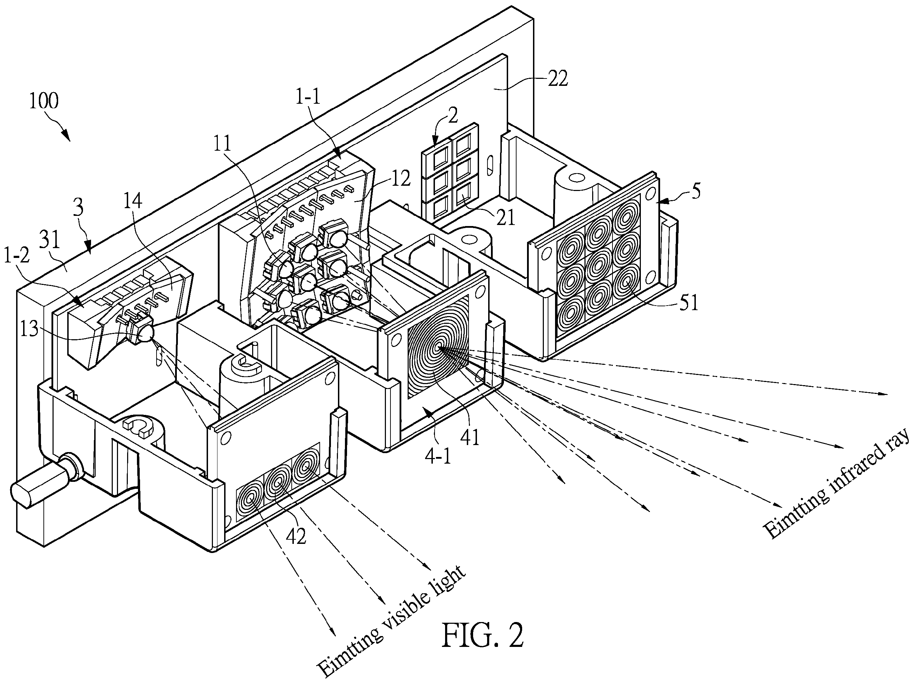

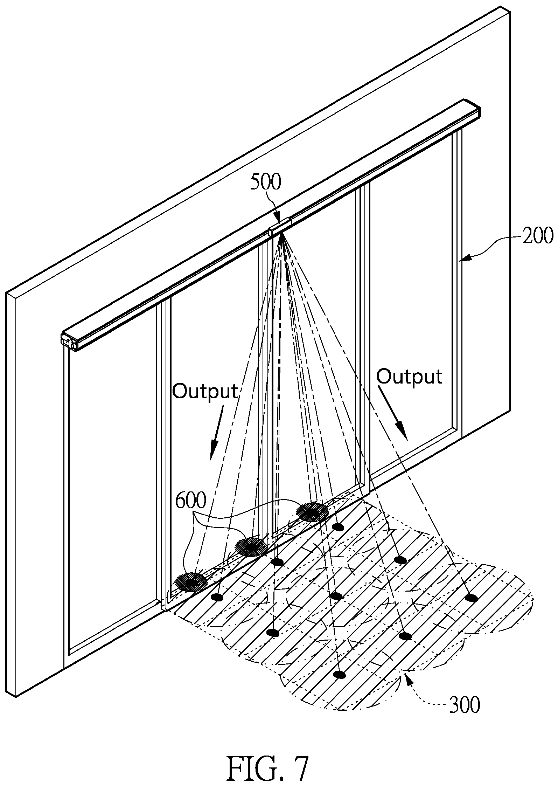

Reference is made to FIG. 2. In the present embodiment, the light emitting module 1-1 can be an infrared light emitting module, and is configured to emit visible light projection points 600 (as shown in FIG. 7) with the visible light emitting module 1-2, so as to indicate the position of the light field area 300 clearly (as shown in FIG. 7). As shown in FIG. 2, the visible light emitting module 1-2 is disposed at a left side, and the light emitting module 1-1 (which is the infrared light emitting module) is disposed at a middle position.

Reference is made to FIG. 2. The light emitting module 1-1 includes the at least one light emitting component 11, and the quantity of the at least one light emitting component 11 is plural in the present embodiment. The light emitting components 11 can be electrically connected to the first circuit board 12, so as to form a modular design. The light emitting component 11 can project light and form the light field area 300 (as shown in FIG. 7). The light field area 300 is located in a door leaf operating passage of the automatic passing apparatus 200, and a corresponding luminous flux is generated. The light field area 300 can be separately or simultaneously projected on the passing area inside or outside the door of the automatic passing apparatus 200 as needed. The visible light emitting module 1-2 includes at least one visible light emitting component 13, and the visible light emitting component 13 (which can be an LED component or a laser component) can project the visible light projection points 600 in the door leaf operating passage of the automatic passing apparatus 200 (as shown in FIG. 7). In the present embodiment, the position of a front edge of the projected light field area 300 can be indicated synchronously, or the position of the front edge of the light field area in the door leaf operating passage of the automatic passing apparatus 200 can be indicated.

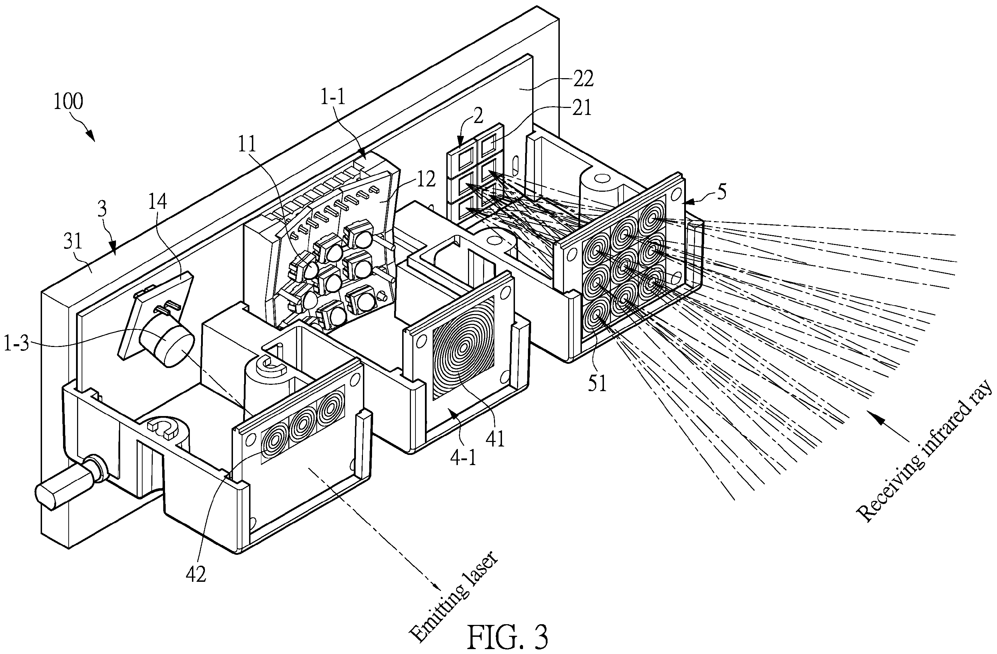

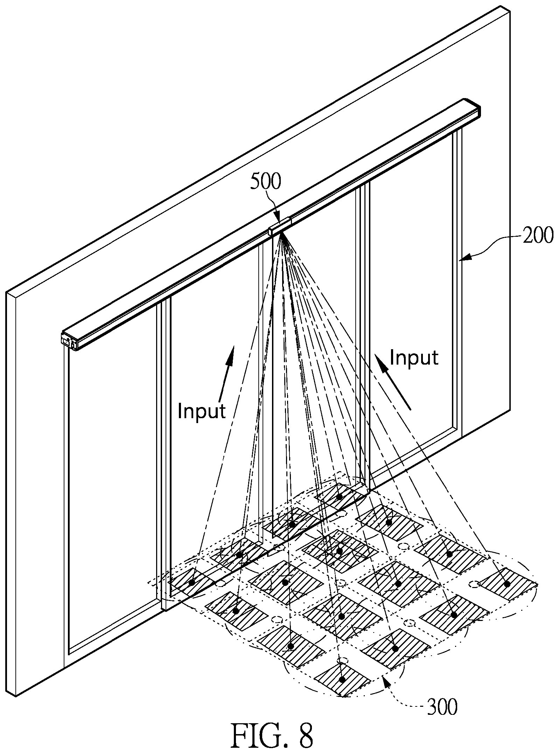

Reference is made to FIG. 3 and FIG. 5. The light receiving module 2 at a right side includes at least one light receiving component 21, and the quantity of the at least one light receiving component 21 is plural in the present embodiment. The light receiving components 21 can be electrically connected to a second circuit board 22, so as to form a modular design. The light receiving component 21 is configured to receive reflection light reflected back by the luminous flux in the light field area 300 (as shown in FIG. 8). Based on whether or not a sensed body is in the light field area, the reflection light of the luminous flux will have a corresponding variation.

Reference is made to FIG. 2 and FIG. 5. In the present embodiment, each light emitting module 1-1 is correspondingly provided with an emitting convex lens group 4-1. The emitting convex lens group 4-1 includes at least one emitting convex lens 41, which can be a Fresnel lens. The emitting convex lens 41 can be disposed in front of the light emitting components 11 based on the requirement of geometrical optics. Light beams emitted by the light emitting components 11 are projected to the emitting convex lens 41, and are correspondingly projected to a passing detection area of the automatic passing apparatus 200, so as to form the light field area 300.

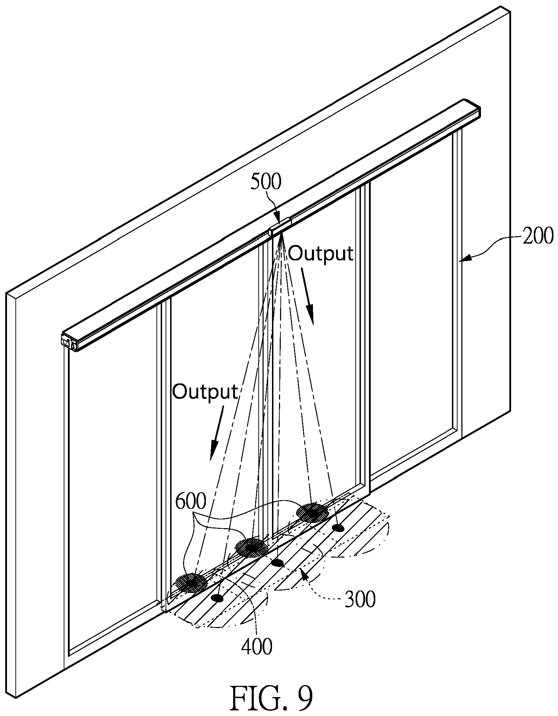

Reference is made to FIG. 2. In the present embodiment, each visible light emitting module 1-2 is provided with a visible light emitting convex lens group 4-2, which includes at least one visible light emitting convex lens 42 that can be a Fresnel lens. The visible light emitting convex lens 42 can be disposed in front of the visible light emitting components 13 based on the requirement of geometrical optics, and visible light projected by the visible light emitting components 13 can be correspondingly projected to the visible light emitting convex lens 42. The visible light emitting module 1-2 can be a laser emitting module 1-3, and the laser emitting component and the visible light emitting convex lens can integrally cover an apparatus (as shown in FIG. 3). The visible light module is configured to correspondingly project to the front edge of the visible light projection points 600 in the light field area 300 (as shown in FIG. 7 and FIG. 9).

Reference is made to FIG. 3 and FIG. 5. In the present embodiment, each light receiving module 2 is correspondingly provided with a receiving convex lens group 5, and the receiving convex lens group 5 includes at least one receiving convex lens 51. The reflection light reflected back in the light field area 300 (as shown in FIG. 8) can be reflected to the light receiving component 21 through the receiving convex lens 51.

Reference is made to FIG. 3 and FIG. 5. The light receiving module 2 is electrically connected to the control module 3, and the light receiving component 21 can be electrically connected to the control module 3 by the second circuit board 22. The control module 3 includes a processing unit 31, which includes an electrical circuit, a micro-controller unit (MCU), a memory (RAM), etc. The light receiving component 21 is configured to receive the reflection light reflected back by the luminous flux in the light field area 300, and the reflection light is converted into an electrical signal by a photoelectric conversion unit (such as an infrared sensing LED) and sent to the processing unit 31 of the control module 3. The variation of the reflection light in the light field area 300 (as shown in FIG. 8) can be used to determine whether or not a sensed body (such as personnel or an object) enters the light field area, so as to keep the door leaf of the automatic passing apparatus 200 opened or switch off the control thereof.

Reflection light beams of multiple ones of the light field area 300 are converted into electrical signals and stored in a memory database of the processing unit 31 for comparison. The database is pre-stored with states of the sensed body (such as personnel or an object) that represent the different light field areas 300, and each light field area 300 can correspondingly represent one of various states of the sensed body (such as personnel or an object). The states of the sensed body includes a dynamic state and a static state of the sensed body (such as personnel or an object), which are used to determine whether or not the sensed body (such as personnel or an object) enters the light field area.

If no sensed body (such as personnel or an object) enters the light field area 300, a static first electrical signal is generated and stored in the processing unit 31 of the control unit 3, and then the variation of the reflection light in the light field area 300 can be utilized. If the sensed body enters the light field area 300 (whether dynamically or statically), changing or fluctuated reflection light will be generated, and will be converted into a changing electrical signal by the light receiving component 21. The electrical signal is input into the processing unit 31 of the control module 3, and is compared with the stored static first electrical signal, so as to provide the control of keeping the automatic passing apparatus opened or closed. As stated above, if a foreign sensed body is static in the light field area 300, changing static reflection light and a changing static first electrical signal will also be generated, and the door leaf can be kept in the opened state by the determination of the processing unit 31 of the control module 3, so as to provide the protection function of preventing the door leaf of the automatic passing apparatus from closing on a person. Therefore, in the present invention, the variation of the reflection light in the light field area 300 can be used to determine whether or not a sensed body (such as personnel or an object) enters the light field area regardless of whether the sensed body is in the dynamic state or the static state.

Reference is made to FIG. 4 and FIG. 5. In the present embodiment, one single light receiving module 2 is used for receiving the reflection light reflected back from the light field area 300. In the present embodiment, the visible light emitting module is omitted.

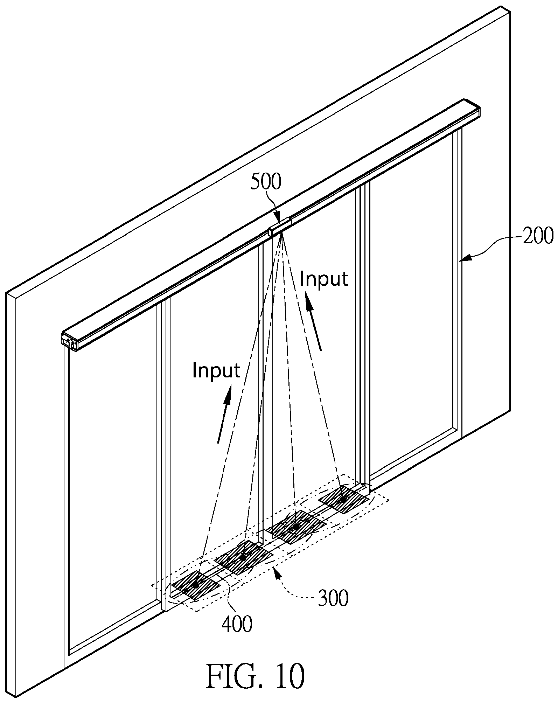

Reference is made to FIG. 9 and FIG. 10. The safety mechanism 100 can also be used for providing safety light anti-pinch protection function. If the light emitting module 1-1 and the light receiving module 2 are configured to project in the area where the door leaf of the automatic passing apparatus moves, a closing operation of the door leaf that is performed at a constant velocity can also be sensed, and a third door leaf electrical signal of regular door leaf reflection light will be generated and stored in the processing unit 31 of the control module 3. The stored third door leaf electrical signal can be used for comparing with the third door leaf electrical signal generated after the closing operation of the door leaf. If in the closed state, the third door leaf electrical signal has the reflection light with the same regular pattern, the processing unit 31 of the control module 3 can command the door leaf of the automatic passing apparatus to complete a closing action.

Referring to FIG. 9 and FIG. 10, both of the door leaf light emitting module 1-1 and door leaf light receiving module 2 are configured to only correspondingly project and sense the position of a door leaf operating path 400 of the automatic passing apparatus, and a luminous flux of the light field of another door leaf operating area is formed. When the door leaf is fully opened and no sensed body enters the door leaf operating path 400, the door leaf light receiving module 2 will generate a second static electrical signal of the door leaf, which is stored to the processing unit 31 of the control module 3 for comparison and reference. Later, when the door leaf is fully opened and the sensed body enters the light field of the door leaf operating path 400, regardless of whether in the dynamic or static state, the door leaf light receiving module 2 will generate a second changing electrical signal of the door leaf, and the two second electrical signals are compared in the processing unit. If waveforms of the two electrical signals are different, the control module 3 will command the automatic passing apparatus 200 to be in the opened state. Since the closing operation of the door leaf of the automatic passing apparatus 200 is performed at a constant velocity, the operating door leaf is configured to reflect reflection light with regular variation in the door leaf operating path 400. The door leaf light receiving module 2 is configured to output the third door leaf electrical signal, which is further stored in the processing unit 31 of the control module 3. Later, the third door leaf electrical signal generated from each closing operation of the door leaf will be compared with the stored third door leaf electrical signal in the processing unit 31. If the two third door leaf electrical signals have the fluctuation with the same regular variation, the processing unit 31 of the control module 3 can command the door leaf in the door leaf operating path 400 to complete the closing action.

### [Beneficial Effects of the Embodiments]

In conclusion, the safety mechanism for comparing the sensing signals provided by the present invention includes at least one light emitting module, at least one light receiving module, and a control module. The light emitting module includes one or more light emitting component, and the light emitting component is configured to emit light and form a light field area and a corresponding luminous flux in a passing path of an automatic passing apparatus by a geometrical optics approach. The control module includes a processing unit. After the light receiving component receives reflection light reflected back in the light field area, the reflection light is converted into an electrical signal and is sent to the processing unit. By using variation of the reflection light in the light field area, the processing unit is configured to determine whether or not a sensed body enters the light field area, so as to provide control of opening and closing of the automatic passing apparatus. Accordingly, in the present invention, the variation of the reflection light in the light field area is utilized for accurate detection and determination. Even if the sensed body is in a static state, a door leaf can still be kept in an opened position, such that a safe and reliable closing operation of the door leaf can be ensured, and an improved safety protection effect can be achieved.

Furthermore, the light field area of the present invention can be located in a door leaf operating path of the automatic passing apparatus. By using the variation of the reflection light in the light field area, whether or not the sensed body enters the door leaf operating path of the automatic passing apparatus can be determined. In addition, whether the sensed body in the door leaf operating path of the automatic passing apparatus is the automatic passing apparatus itself, personnel, or an object can also be determined, so as to provide safety light anti-pinch protection function.

Furthermore, the light field area of the present invention can be located in an operating path of the automatic passing apparatus. A closing operation of the door leaf is performed at a constant velocity, such that door leaf reflection light with regular variations and a third door leaf electrical signal are generated and stored in the processing unit of the control module. Later, the third door leaf electrical signal generated in each closed state of the door leaf is input into the processing unit, and is compared with the stored third door leaf electrical signal mentioned above. If the two door leaf electrical signals have a same regularly changing fluctuation, the control module will command the door leaf of the automatic passing apparatus to complete a closing action.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A safety mechanism (100) for comparing sensing signals, which is disposed in a light quantity sensor (500) of an automatic passing apparatus (200), **characterized by** comprising:
at least one emitting convex lens group (4-1), wherein the at least one emitting convex lens group (4-1) includes one or more emitting convex lenses (41);
at least one light emitting module (1-1), wherein the at least one light emitting module (1-1) includes one or more light emitting components (11), and each of the light emitting components (11) is configured to project light to the respective emitting convex lens (41) by a geometrical optics approach, so as to form a corresponding light field area (300) and a corresponding luminous flux;
at least one receiving convex lens group (5), wherein the at least one receiving convex lens group (5) includes one or more receiving convex lenses (51);
at least one light receiving module (2), wherein the at least one light receiving module (2) includes one or more light receiving components (21), and is a photoelectric conversion component; wherein the luminous flux of the light field area (300) is configured to reflect a corresponding one of reflection light depending on an environment, is configured to reflect the corresponding one of the reflection light to respective one of the light receiving components (21) through the at least one receiving convex lens group (5) by the geometrical optics approach, and is configured to convert the reflection light into a corresponding electrical signal; and
at least one control module (3), wherein the at least one light receiving module (2) is electrically connected to the at least one control module (3), the at least one control module (3) includes at least one processing unit (31), and the processing unit (31) includes an electronic circuit, a micro-controller, and a memory; wherein the corresponding electrical signal converted by the light receiving component (21) is input and stored in the processing unit (31);
wherein, when a sensed body is absent from the light field area (300), the at least one light receiving module (2) is configured to output a static first environment electrical signal, and the first environment electrical signal is stored in the processing unit (31) of the at least one control module (3) for comparison and reference; wherein, when the sensed body is present in the light field area (300), the at least one light receiving module (2) is configured to generate a first changing electrical signal regardless of whether the sensed body is in a dynamic or a static state, and the first changing electrical signal is compared with the first environment electrical signal that is stored in the processing unit (31); wherein, in response to a waveform of the first changing electrical signal being different from a waveform of the first environment electrical signal, the at least one control module (3) is configured to enable the automatic passing apparatus (200) to be in an opened state;
wherein a door leaf light emitting module (1-1) and a door leaf light receiving module (2) are configured to correspondingly project and sense a moving position of a door leaf of the automatic passing apparatus (200), so as to form a luminous flux of a door leaf light field area; wherein, when the door leaf is fully opened and the sensed body is absent from the door leaf light field area, the door leaf light receiving module (2) is configured to generate a static second electrical signal of the door leaf, and the second static electrical signal is additionally stored in the processing unit (31) of the at least one control module (3) for comparison and reference; wherein, when the door leaf is fully opened and the sensed body is present in the door leaf light field area, the door leaf light receiving module (2) is configured to generate a second changing electrical signal of the door leaf regardless of whether the sensed body is in the dynamic or the static state, and the second changing electrical signal is compared with the stored second static electrical signal in the processing unit (31); wherein, in response to a waveform of the second changing electrical signal being different from a waveform of the second static electrical signal, the at least one control module (3) is configured to enable the automatic passing apparatus (200) to be in the opened state; wherein a closing operation of the door leaf of the automatic passing apparatus (200) is performed at a constant velocity, such that the door leaf reflects reflection light with regular variations within an operation area of the door leaf; wherein the door leaf light receiving module (2) is configured to output a third door leaf electrical signal, and the third door leaf electrical signal is additionally stored in the processing unit (31) of the at least one control module (3); wherein the third door leaf electrical signal generated from each closing operation of the door leaf is compared with the stored third door leaf electrical signal in the processing unit (31), and the processing unit (31) of the at least one control module (3) is configured to enable the door leaf of the automatic passing apparatus (200) to complete a closing action when a same regularly changing fluctuation is detected.

2. The safety mechanism (100) according to claim 1, wherein a quantity of the one or more light emitting components (11) is plural, and the light emitting components (11) are electrically connected to a first circuit board (12); wherein a quantity of the one or more light receiving components (21) is plural, and the light receiving components (21) are electrically connected to a second circuit board (22); wherein the light receiving components (21) are electrically connected to the at least one control module (3) through the second circuit board (22).

3. The safety mechanism (100) according to claim 1, wherein the at least one light emitting module (1-1) is correspondingly disposed at a rear side of the at least one emitting convex lens group (4-1), and light emitted by the light emitting component (11) is projected to a passing environment through the emitting convex lens (41), so as to form the light field area (300) corresponding to the luminous flux; wherein the at least one light receiving module (2) is correspondingly disposed at a rear side of the at least one receiving convex lens group (5), and the light reflected back by the luminous flux in the light field area (300) is reflected to the light receiving component (21) through the receiving convex lens (51).

4. The safety mechanism (100) according to claim 1, wherein the emitting convex lens (41) and the receiving convex lens (51) are each a Fresnel lens.

5. The safety mechanism (100) according to claim 1, wherein the luminous flux of the light field area (300) reflects static reflection light when the sensed body is absent from the light field area (300), and the static reflection light is converted into a first static electrical signal and is stored in a database of the processing unit (31) for comparison; wherein each reflection light of the luminous flux of the light field area (300) correspondingly represents one of various states of the sensed body, and the states of the sensed body include the dynamic state and the static state.

6. The safety mechanism (100) according to claim 1, wherein a database of the processing unit (31) stores data of various door leaf electrical signals converted from the reflection light of the luminous flux in the door leaf light field area as the door leaf of the automatic passing apparatus (200) is in a fully-opened state, a fully-closed state, and a moving state for comparison.

7. The safety mechanism (100) according to claim 1, wherein a database of the processing unit (31) stores various electrical signals for comparing a variation of the reflection light of the luminous flux in the light field area (300), each type of the variation of the reflection light of the luminous flux in the light field area (300) correspondingly represents one of various states of the sensed body, and the states of the sensed body include the dynamic state and the static state.

8. The safety mechanism (100) according to claim 1, wherein the at least one light emitting module (1-1) includes at least one visible light emitting module (1-2), the at least one visible light emitting module (1-2) includes at least one visible light emitting component (13) and one or more visible light emitting convex lenses (42), and visible light is emitted by the geometrical optics approach to generate at least one visible light projection point (600); wherein the at least one visible light emitting module (13) is a laser emitting module (1-3), and a laser emitting component and the visible light emitting convex lens (42) integrally cover an apparatus and emitting at least one laser projection point; wherein the at least one visible light emitting module (1-2) is configured to correspondingly project on a position at an inner side of a front edge of the light field area (300), and is configured to indicate relative positions of the light field area (300) and the automatic passing apparatus (200).

9. A safety mechanism (100) for comparing sensing signals which is disposed in a light quantity sensor (500) of an automatic passing apparatus (200), **characterized by** comprising:
at least one emitting convex lens group (4-1), wherein the at least one emitting convex lens group (4-1) includes one or more emitting convex lenses (41);
at least one light emitting module (1-1), wherein the at least one light emitting module (1-1) includes one or more light emitting components (11), and each of the light emitting components (11) is configured to project a light to the respective emitting convex lens (41) by a geometrical optics approach, so as to form a corresponding light field area (300) and a corresponding luminous flux;
at least one receiving convex lens group (5), wherein the at least one receiving convex lens group (5) includes one or more receiving convex lens (51);
at least one light receiving module (2), which includes at least one light receiving component (21) and is a photoelectric conversion component, wherein the luminous flux of the light field area (300) is configured to reflect corresponding one of reflection light depending on an environment, and is configured to reflect the corresponding one of reflection light to the respective light receiving component (21) through the at least one receiving convex lens group (5) by a geometrical optics approach, and is configured to convert the reflection light into a corresponding electrical signal; and
at least one control module (3), wherein the at least one light receiving module (2) is electrically connected to the at least one control module (3), the at least one control module (3) includes at least one processing unit (31), and the processing unit (31) includes an electronic circuit, a micro-controller, and a memory; wherein the corresponding electrical signal converted by the light receiving component (21) is input and stored in the processing unit (31);
wherein, when a sensed body is absent from the light field area (300), the at least one light receiving module (2) is configured to generate a first environment electrical signal, and the first environmental electrical signal is stored in the processing unit (31) of the at least one control module (3) for comparison and reference; wherein, when the sensed body is present in the light field area (300), the at least one light receiving module (2) is configured to generate a first changing electrical signal regardless of whether the sensed body is in a dynamic or a static state, and the first changing electrical signal is compared with the first environment electrical signal that is stored in the processing unit (31); in response to a waveform of the first changing electrical signal being different from a waveform of the first environment electrical signal, the at least one control module (3) enable the automatic passing apparatus (200) to be in an opened state.

10. The safety mechanism (100) according to claim 9, wherein the quantity of the one or more light emitting components (11) is plural, and the light emitting components (11) are electrically connected to a first circuit board (12); wherein the quantity of the one or more light receiving components (21) is plural, and the light receiving components (21) are electrically connected to a second circuit board (22); wherein the light receiving components (21) are electrically connected to the at least one control module (3) through the second circuit board (22).

11. The safety mechanism (100) according to claim 9, wherein the at least one light emitting module (1-1) is correspondingly disposed at a rear side of the at least one emitting convex lens group (4-1), and light emitted by the light emitting component (11) is projected to a passing environment through the emitting convex lens (41), so as to form the light field area (300) corresponding to the luminous flux; wherein the at least one light receiving module (2) is correspondingly disposed at a rear side of the at least one receiving convex lens group (5), and the light reflected back by the luminous flux in the light field area (300) is reflected to the light receiving component (21) through the receiving convex lens (51).

12. The safety mechanism (100) according to claim 9, wherein the emitting convex lens (41) and the receiving convex lens (51) are each a Fresnel lens.

13. The safety mechanism (100) according to claim 9, wherein the luminous flux of the light field area (300) reflects static reflection light when the sensed body is absent from the light field area (300), and the static reflection light is converted into a first static electrical signal and is stored in a database of the processing unit (31) for comparison; wherein each reflection light of the luminous flux of the light field area (300) correspondingly represents one of various states of the sensed body, and the states of the sensed body includes the dynamic state and the static state.

14. The safety mechanism (100) according to claim 9, wherein a database of the processing unit (31) stores data of various door leaf electrical signals converted from the reflection light of the luminous flux in the door leaf light field area as the door leaf of the automatic passing apparatus (200) is in a fully-opened state, a fully-closed state, and a moving state for comparison.

15. The safety mechanism (100) according to claim 9, wherein a database of the processing unit (31) stores various electrical signals for comparing a variation of the reflection light of the luminous flux in the light field area (300), each type of the variation of the reflection light of the luminous flux in the light field area (300) correspondingly represents a sensed body state, including a sensed body dynamic state and a sensed body static state.

16. The safety mechanism (100) according to claim 9, wherein the at least one light emitting module (1-1) includes at least one visible light emitting module (1-2), the visible light emitting module (1-2) includes at least one visible light emitting component (13) and at least one visible light emitting convex lens (42), and visible light is emitted by the geometrical optics approach to generate at least one visible light projection point (600); wherein the visible light emitting module (1-2) is a laser emitting module (1-3), and a laser emitting component and the visible light emitting convex lens (42) integrally cover an apparatus, and are emitting at least one laser projection point; wherein the at least one visible light emitting module (1-2) is configured to correspondingly project on a position at an inner side of a front edge of the light field area (300), and is configured to indicate relative positions of the light field area (300) and the automatic passing apparatus (200).

17. A safety mechanism (100) for comparing sensing signals disposed in a light quantity sensor (500) of an automatic passing apparatus (200), **characterized by** comprising:
at least one emitting convex lens group (4-1), wherein the at least one emitting convex lens group (4-1) includes one or more emitting convex lenses (41);
at least one light emitting module (1-1), wherein the at least one light emitting module (1-1) includes one or more light emitting components (11), wherein the light emitting component (11) is configured to project light to the respective emitting convex lens (41) by a geometrical optics approach, so as to form a corresponding light field area (300) and a corresponding luminous flux;
at least one receiving convex lens group (5), wherein the at least one receiving convex lens group (5) includes one or more receiving convex lens (51);
at least one light receiving module (2), wherein the at least one light receiving module (2) includes one or more light receiving components (21) and is a photoelectric conversion component, wherein the luminous flux of the light field area (300) is configured to reflect corresponding reflection light depending on an environment, is configured to reflect to the respective light receiving component (21) through the at least one receiving convex lens group (5) by a geometrical optics approach, and is configured to convert the reflection light into a corresponding electrical signal; and
at least one control module (3), wherein the at least one light receiving module (2) is electrically connected to the at least one control module (3), the at least one control module (3) includes at least one processing unit (31), and the processing unit (31) includes an electronic circuit, a micro-controller and a memory; wherein the corresponding electrical signal converted by the light receiving component (21) is input and stored in the processing unit (31);
wherein a door leaf light emitting module (1-1) and a door leaf light receiving module (2) are configured to correspondingly project and sense a moving position of a door leaf of the automatic passing apparatus (200), so as to form a luminous flux of a door leaf light field area; wherein, when the door leaf is fully opened and the sensed body is absent from the door leaf light field area, the door leaf light receiving module (2) is configured to generate a second static electrical signal of the door leaf, and the second static electrical signal is additionally stored in the processing unit (31) of the at least one control module (3) for comparison and reference; wherein, when the door leaf is fully opened and the sensed body is present in the door leaf light field area, the door leaf light receiving module (2) is configured to generate a second changing electrical signal of the door leaf regardless of whether the sensed body is in a dynamic or a static state, and the second changing electrical signal is compared with the stored second static electrical signal in the processing unit (31); wherein in response to a waveform of the second changing electrical signal being different from a waveform of the second static electrical signal, the at least one control module (3) is configured to enable the automatic passing apparatus (200) to be in an opened state; wherein a closing operation of the door leaf of the automatic passing apparatus is performed at a constant velocity, such that the door leaf reflects reflection light with regular variations within an operation area of the door leaf; wherein the door leaf light receiving module (2) is configured to output a third door leaf electrical signal, and the third door leaf electrical signal is additionally stored in the processing unit (31) of the at least one control module (3); wherein the third door leaf electrical signal generated from each closing operation of the door leaf is compared with the third door leaf electrical signal that is stored in the processing unit (31), and the processing unit (31) of the at least one control module (3) is configured to enable the door leaf of the automatic passing apparatus (200) to complete a closing action when a same regularly changing fluctuation is detected.

18. The safety mechanism (100) according to claim 17, wherein the quantity of the one or more light emitting components (11) is plural, and the light emitting components (11) are electrically connected to a first circuit board (12); wherein the quantity of the one or more light receiving components (21) is plural, and the light receiving components (21) are electrically connected to a second circuit board (22), and the light receiving components (21) are electrically connected to the at least one control module (3) through the second circuit board (22).

19. The safety mechanism (100) according to claim 17, wherein the at least one light emitting module (1-1) is correspondingly disposed at a rear side of the at least one emitting convex lens group (4-1), and light emitted by the light emitting component (11) is projected to a passing environment through the emitting convex lens (41), so as to form the light field area (300) corresponding to the luminous flux; wherein the at least one light receiving module (2) is correspondingly disposed at a rear side of the at least one receiving convex lens group (5), and the light reflected back by the luminous flux in the light field area (300) is reflected to the light receiving component (21) through the receiving convex lens.

20. The safety mechanism (100) according to claim 17, wherein the emitting convex lens (41) and the receiving convex lens (51) are each a Fresnel lens.

21. The safety mechanism (100) according to claim 17, wherein the luminous flux of the light field area (300) reflects static reflection light when the sensed body is absent from the light field area (300), and the static reflection light is converted into a first static electrical signal and is stored in a database of the processing unit (31) for comparison; wherein each reflection light of the luminous flux of the light field area (300) correspondingly represents one of various states of the sensed body, and the states of the sensed body include the dynamic state and the static state.

22. The safety mechanism (100) according to claim 17, wherein a database of the processing unit (31) stores data of various door leaf electrical signals converted from the reflection light of the luminous flux in the door leaf light field area as the door leaf of the automatic passing apparatus (200) is in a fully-opened state, a fully-closed state, and a moving state for comparison.

23. The safety mechanism (100) according to claim 17, wherein a database of the processing unit (31) stores various types of electrical signals for comparing a variation of the reflection light of the luminous flux in the light field area (300), each type of the variation correspondingly represents one of various states of the sensed body, and the states of the sensed body include the dynamic states and the static state.

24. The safety mechanism (100) for comparing sensing signals according to claim 17, wherein the at least one light emitting module (1-1) includes at least one visible light emitting module (1-2), the at least one visible light emitting module (1-2) includes at least one visible light emitting component (13) and at least one visible light emitting convex lens (42), and a visible light is emitted by the geometrical optics approach to generate at least one visible light projection point (600); wherein the at least one visible light emitting module (1-2) is a laser emitting module (1-3), and a laser emitting component and the at least one visible light emitting module (1-2) integrally cover an apparatus, and emitting at least one laser projection point; wherein the visible light module is configured to correspondingly project on a position at an inner side the front edge of the light field area (300), and is configured to indicate relative positions of the light field area (300) and the automatic passing apparatus (200).
